# EUROPEAN PATENT SPECIFICATION

(11) **EP 1 641 347 B1**
(45) Date of publication and mention of the grant of the patent: **21.01.2009**
(21) Application number: 04763553.7
(22) Date of filing: 09.07.2004
(51) Int. Cl.: A23G 1/00

(54) **WHOLE COCOA BEAN PRODUCTS**
PRODUKT AUS GANZEN KAKAOBOHNEN
PRODUITS ISSUS DE FEVES DE CACAO ENTIERES

(30) Priority: 09.07.2003 GB 0316110
(43) Date of publication of application: 05.04.2006
(73) Proprietor: Natraceutical S.A., 46930 Valencia (ES)
(72) Inventor: ZUMBE, Albert, Champel, 1206 Geneva (CH)
(74) Representative: Gonzalez-Alberto Rodriguez, Natalia
(86) International application number: PCT/EP2004/008431
(87) International publication number: WO 2005/004619

(56) References cited:
- EP-A- 0 068 229
- GB-A- 622 628
- US-A- 4 281 027
- US-A- 5 252 349
- US-A1- 2002 176 916
- PATENT ABSTRACTS OF JAPAN vol. 010, no. 292 (C-376), 3 October 1986 (1986-10-03) -& JP 61 108351 A (TAKASAGO CORP), 27 May 1986 (1986-05-27)
- STEHLI C.: "Spore Inactivation on Cocoa Beans" THE MANUFACTURING CONFECTIONER, no. 3, March 2003 (2003-03), pages 56-61, XP008029431 cited in the application
- FUHRMAN E.: "Chocolate and cocoa products , making the best better" CANDY INDUSTRY, vol. 168, no. 10, 2003, page 47,48,56, XP008029433

## Description

The present invention relates to processes for producing whole roasted cocoa bean products containing the original cocoa shell. More specifically, processes for producing whole cocoa bean liquor and whole cocoa bean powders with differing fat contents are described.

Cocoa beans constitute the raw material for the production of cocoa and chocolate products. A cocoa bean consists of two main parts, the shell and the nib. In conventional manufacturing processes, it is only the nib which is used and the cocoa shell which accounts for approximately 12% by weight of a cocoa bean, is discarded as a by product. In many countries, the composition of cocoa and chocolate are legally defined. In particular, legislation in the USA restricts the cocoa shell content of chocolate to no more than 1.75% by weight.

There is a considerable difference between the composition of cocoa nib and cocoa shell. Advantageously, the cocoa shell is a valuable source of dietary fibre and contains some cocoa fat. DE 3125144 C1 proposes the use of cocoa shell as a dietary fibre but the treatment process relies on washing to reduce the theobromine content.

Given the current legislation regarding shell content, at present there is no cheap manufacturing process directed towards processing the whole cocoa bean to produce whole roasted cocoa bean products which have the flavours desired by the consumer. In the traditional processes, the first step is the cracking of the whole bean and the subsequent removal of the shells. However, while a product containing a whole cocoa bean could not officially be termed chocolate, it is believed that a roasted whole cocoa bean powder, produced by a cheaper process than those currently used, would be useful in food products where it is the flavour of the product rather than the texture which is important. The inclusion of the shells has the further associated advantage of dietary fibre content.

A process for decontaminating whole cocoa beans known as debacterization has been well described in the prior art, for example by Stehli C et al, The Manufacturing Confectioner, March 2003, p56-61. In particular this paper details the Buhler debacterization method. In this process whole cocoa beans are treated with pressurized steam. It is a high pressure (300 - 550kPa), high temperature (130-23°C) and fast (1-5 minutes) process. Such a process makes it possible to sterilize small volumes of product in each batch (100kg).

GB-B-622628 details a cocoa powder production process wherein the whole cocoa beans are steeped in water, finely divided, dehydrated and then roasted with the end product being a whole cocoa bean powder. The dehydration and roasting steps may optionally be carried out at the same time. However such powders can have an undesirable bitter flavour unless subjected to further treatment steps such as alkalisation. It is an object of the present invention to provide a cheap and effective method for producing whole cocoa bean powder which has desirable flavour characteristics.

US 4281027 discloses a process in which a cocoa bean product is produced comprising extracting fat from unshelled cocoa beans, freezing and pulverizing.

The object of the present invention is to provide an efficient manufacturing process for yielding high quality whole cocoa bean powder which has a low microbiological content and a fat content of less than 15wt%.

The present invention provides a process in which whole cocoa bean product is produced comprising the steps of
(a) subjecting whole cocoa beans to a cleaning step whereby the cocoa beans are passed through a cleaning machine that removes dried cocoa pulp, pieces of pod and other extraneous material to yield cleaned whole cocoa beans;
(b) pressing the whole cleaned cocoa beans to reduce the fat content to not more than 15wt% and to form a presscake and fat which is removed;
(c) subjecting the presscake to a particle size reduction step to obtain a bean intermediate whereby no more than 1 vol% of the product has a particle size greater than or equal to 1 cm;
(d) subjecting the bean intermediate to a microbicidal step to obtain a bean intermediate with a reduced microbiological content;
(e) subjecting the bean intermediate with reduced microbiological content to a drying step to reduce the moisture content to no more than 7wt% and give a dried bean intermediate;
(f) subjecting the dried bean intermediate to a particle size reduction step whereby no more than 2wt% of the product has a particle size of greater than or equal to 150µm characterized in that:
   (i) substantially no solids other then fat are removed; and (ii) a whole cocoa bean product is produced as the end product;

Optionally the whole cocoa bean product may then be subjected to a stabilization step by cooling and/or sieved. Where both steps are included, preferably sieving is carried out after the stabilization step.

Where the term "whole bean" is used in this application, it refers to a product which contains the same amount of shell as is present in a natural whole bean i.e the same proportion of nib to shell. A whole bean will usually contain 9-14% shell based on the total weight of the bean. In a whole cocoa --bean-the-ratio-of-dry-defatted-shell-to dry defatted nib is approximately 0.3. Such a ratio is often quoted when referring to the compositions of whole cocoa beans and hence is a measurement with which one skilled in this area would-be familiar. Whilst during the processing of the whole bean detailed in this application, water and oil may be removed, no other solids will be removed. The ratio of the dry defatted shell to dry defatted nib in the end product should be within 10% of the ratio of the dry defatted shell to dry defatted nib in the starting material. Preferably the final ratio is within 5% of the ratio in the starting material. More preferably the final ratio is within 2% of the ratio in the starting material. The process should not include any step where shell solids are removed and not recombined with nib solids in substantially the same proportion. The ratio of dry defatted shell to dry defatted nib can be determined by analysis (AOAC 2002; method 31.2.02) or calculated in both the starting material and final product. The ratio need not be defined by reference to the process steps although this is often the most convenient method of calculation.

The whole beans are cleaned in step (a) as in the traditional cocoa manufacturing process. Fibres from sacks, stones and grit, metal, bean clusters and immatures are removed by passing the whole beans through a cleaning machine in which a series of operations using screens of various meshes, brushes, air-lifts and magnetic separators are carried out.

In step (b) of the process of the present invention, the cleaned whole cocoa beans of step (a) are pressed to reduce the fat content to not more than 15wt% and form a presscake which is the starting material for step (c) and fat which is recovered.

The cleaned whole cocoa beans can be pressed by use of either a hydraulic, an expeller or a screw press. In a preferred embodiment, hydraulic pressing at pressures up to 50 MPa is used. Following pressing, the presscake which has a fat content of less than 15wt% is removed and processed according to the subsequent steps of the present invention. In this application, the generic term "fat" is used to refer to lipid materials which naturally occur in the cocoa bean and are usually solid at room temperature.

It is possible to use an expeller press rather than a hydraulic press. Expeller presses are commonly used in the oil seed industry. An expeller consists of a screw (or worm), rotating inside a cylindrical cage (barrel). The material to be pressed is fed between the screw and the barrel and propelled by rotating the screw in a direction parallel to the axis. The configuration of the screw and its shaft is such that the material is progressively compressed as it moves on, towards the discharge end of the cylinder. The gradually increasing pressure releases the fat which is a liquid, which flows out of the press cake continues to move in the direction of the shaft, towards a discharge gate installed in the other extremity of the machine. The major advantage of the expeller press is that a larger amount of fat can be removed, for example, reducing the fat content of the press cake to 8 to 9wt%. After step (b), a particle size reduction step (c) is included. In this step, the particle size is reduced such that no more than 1 wt% of the product has a particle size greater than 1 cm. This step is necessary because a homogeneous (i.e. less than 1 cm) particle size is required in order to guarantee the effectiveness of the subsequent steps.

In many countries where obesity and being overweight are common problems, there is a strong consumer demand for low fat products. Hence in a further embodiment, the process of the present invention includes a further defatting step after step (b) prior to step (d).

In order to produce a defatted whole cocoa bean powder, the fat content of a press cake needs to be reduced from a value in the range of about 12-15wt% to a value less than 2wt%. The traditional process for cocoa fat removal is solvent extraction. In the method of solvent extraction, the solvent diffuses into the fat bearing material resulting in a solution of fat in the solvent. It is more effective using press or expeller cake as starting material for this step than cocoa powder, as cocoa powder does not allow percolation of solvent. Fat content can be determined by AOAC methods (2002)

While there are many types of solvent extraction which could be used, it is preferable to use an organic solvent, in particular hexane. After fat extraction, hexane is removed from the defatted press cake by evaporation using steam treatment.

As an alternative to use of an organic solvent for the extraction of cocoa fat, supercritical extraction can be employed. Suitable gases for supercritical extraction include carbon dioxide, butane and propane. Although this process is more expensive, it avoids the problems of solvent residues in the powder and of waste disposal.

Optionally an enzymatic treatment may be included in the process of the present invention after step (c) and prior to step (d). The purpose of including such a step is to enhance the flavour of the end whole cocoa bean products by reducing bitterness

The use of enzymes in a flavour producing step is advantageous as such reactions are associated with fewer side reactions, less waste products and yield higher quality products with a reduced degree of contamination.

In the optional enzymatic treatment step of the present invention, preferably a polyphenol oxidase is used. Polyphenols give cocoa beans a strong and bitter taste. By introducing the polyphenol oxidase enzyme, this catalyzes the reaction of polyphenols to orthoquinones which are highly reactive compounds. Once formed, the orthoquinones undergo spontaneous polymerisation to produce high molecular weight compounds or brown pigments (melanins). These melanins may, in turn, react with amino acids and proteins thus intensifying the brown colour and reducing bitterness.

In order to ensure that the specific conditions required for optimization of the reaction are achieved, water is added to the powder to give a final moisture content in the range from 50 to 70wt%. The pH is adjusted to a value in the range 5-7 and the temperature is set at a value in the range 15-60°C. The above described enzymes are added and the Maillard precursors are formed. Preferably the enzymatic treatment step is carried out in a bioreactor and subjected-to continuous agitation. After a period of time, the reaction is stopped by increasing the temperature to a value in the range 100-120°C and reducing the water content to about 20% which causes inactivation of the enzymes. The whole cocoa bean intermediate product of this step may then optionally be subjected to a roasting step.

Polyphenol content can be measured using one of several methods. The most common method used is the Folin-Ciocalteau method which gives the result expressed in wt%. Additionally, other methodologies for the identification and quantification of the polyphenols profile can be used, for example High Pressure Liquid Chromatography (HPLC) systems and mass spectrometry, LC-MS, HPLC coupled the UV detection, super critical fluid extraction (SFE), HPLC using double on-line detection by diode array spectophotometry, mass spectoscopy (HPLC-DAS-MS) and also LC-NMR.

As an alternative to including an enzymatic treatment step, optionally an alkali treatment step may be included after step (c) and prior to step (d). The reason for the inclusion of such a step is a reduction in bitterness and sourness.

Alkali is used traditionally in the manufacture of cocoa powder to increase the reddish colour of the powder, reduce its bitterness and and improve its ability to disperse in aqueous mediums.

As a first step, the moisture content of the bean intermediate is increased to a value in the range from 20 - 50wt%. The bean intermediate is then soaked in potassium or sodium carbonate. The colour change occurs as a result of oxidation of the polyhydroxyphenols based on epicatechins present in the bean intermediate which then polymerize and react during processing. The result is an increase in the number of chromophoric groups in the molecule and hence darker colours. The actual colour achieved relates directly to the reaction conditions.

Preferably the potassium or sodium carbonate is used at a concentration in the range from 2-4wt% and the reaction is carried out for a time period in the range from 15-45 minutes at a temperature in-the range from 70-100°C.

In step (d), the bean intermediate is subjected to a microbicidal step. The-microbicidal step, which results in microbial decontamination of the whole beans is not required in traditional cocoa processing. The microbicidal step of the present invention may for example, be carried out as disclosed in Stehli et al. Cocoa beans are normally contaminated, with as many as 10⁷ -10⁸ aerobic mesophile c.f.u per gram having been detected on whole cocoa beans. However as the shells of the cocoa beans are stable and intact, the high microbe rate is located virtually exclusively on the shell. Decontamination of a bean intermediate has the great advantage of allowing the use of steam which not only kills bacteria but also effectively destroys the spores which remain unaffected by dry roasting.

The purpose of the microbicidal step is to reduce the contamination of the cocoa beans to no more than 5x10³ c.f.u.g⁻¹. The level of contamination can be determined using the method described by OICC 118-1990.

In a preferred microbicidal step, the bean intermediate is treated with pressurised steam. The degree of decontamination depends directly on the pressure, temperature and time of the process step. Preferably the microbicidal step is operated at a pressure, of 145kPa and a temperature in the range from of 120°C to 150°C for a time of 30 mins to 1 hour.

A suitable piece of apparatus for carrying out the microbicidal step using pressurised steam is a vessel which is cylindrically shaped and referred to as a reactor. A suitable reactor is usually made of stainless steel, is double walled to withstand the internal pressure associated with steam heating, capable of being hermetically sealed and is fitted with an agitator and vacuum system. Such a reactor usually has an entry port for the bean intermediate at the top and one to allow injection of superheated steam near the base. In addition, an exit port is located at the base.

The inclusion of a roasting step is optional in the process of the present invention. In one embodiment, a roasting step may be included after step (d) and prior to step (e).

The roasting step may be carried out in a conventional manner. Roasting involves the heating of the material to be roasted to a temperature in the range 110-150°C for a period in the range 20-40 mins. The material is usually agitated during application of the heat treatment. The roasting step is controlled to ensure that the material is heated to the required temperature without causing any burning of the material and hence avoiding production of undesirable flavours.

Any roaster capable of roasting whole cocoa beans may suffice where a roasting step is included. Preferably a continuous roaster is employed wherein warming, roasting and cooling of cocoa beans is by air convection.

In the drying step (e) of the process of the present invention the moisture content of the bean intermediate with reduced microbiological content is reduced from a value in the range 22-24wt% to a value less than 7wt%. More preferably the moisture content is reduced to a value in the range 1-5wt%.

Advantageously the drying step may be carried out in the apparatus used for the microbicidal step Drying is preferably carried out by heating to a temperature in the range from 80 to 100°C at a pressure in the range from 50 to 90kPa for a time period in the range from 30 to 120 minutes.

After the drying step (e), the dried bean intermediate may optionally be subjected to a cooling step. In this step, the temperature is reduced to a value in the range from 45 to 70°C. The reason for including such a cooling step is to improve the effectiveness of the subsequent particle size reduction step (f).

In the present invention, an essential step in the production of whole roasted cocoa bean product is a particle size reduction step (f). The particle size is reduced such that no more than 2wt% of the product has a particle size of greater than or equal to 150µm. Particle sizes are determined by studying light dispersion of a laser ray (Mastersizer, Malvern).

In a preferred embodiment of the particle size reduction step (f) preferably the dried bean intermediates with or without shell from the reactor are ground in a hammer mill followed by ball mills or put through grinding rollers followed by ball mills to produce a whole cocoa bean liquor which is the said whole cocoa bean end product or further processed to produce said whole cocoa bean end product.

A problem with reducing the particle size of whole roasted cocoa beans is the presence of cocoa shell which is typically 200-250µm thick and has a plate structure. Consequently, pressure alone is not sufficient to grind down material containing shell. It has been discovered that a way of minimising this difficulty is to use a combination of pressure and a cutting action on the fraction of the bean intermediate used as the starting material for step (f) which comprises the shell. The result is disintegration of the compressed platelets of the shell. Such pressing and cutting can be readily achieved using a combination of mills. In particular, it is preferable to use a pin or hammer mill to reduce the particle size to less than 5mm followed by a mill separator. A mill separator consists of a mill disc and a separator (classificator) which can act independently at different speeds. The final particle size is achieved by adjusting the separator speed and the feeding flow.

In step (f), a blade or other mill may be advantageously used.

In the particle size reduction step (f), grinding of the dried bean intermediate is achieved. Preferably a combination of a hammer mill and a mill separator is used to break down the press cake into particles with a size of less than 200µm i.e. less than 2% by weight has a particle size of greater than 150µm. A final stage of classification ensures that the resulting whole cocoa bean end powder has a particle size of less than 150µm. The final particle size is achieved by adjusting the separator speed and the feeding flow.

Following the particle size reduction step (f), the whole cocoa bean product may be subjected to a stabilisation step and/or a sieving step. The purpose of including a stabilisation step is to keep the particles moving whilst any remaining fat crystallizes. The stabilization step involves reducing the temperature of the whole cocoa bean product to remove the energy of crystallization of cocoa butter. The stabilisation step is carried out using air at a temperature in the range from 20 to 25°C for a time period in the range from 1 to 4 hours under conditions of continuous stirring by air flow.

The whole cocoa bean product may then be sieved such that it is in an appropriate form to be packaged. The sieves used are of a size in the range from 200 to 300µm.

In some embodiments of the present invention it is possible to separate the shell from the nib of the cocoa bean during the process and then to recombine them in the correct proportions so as the final product has been derived from the whole bean. The shell is separated from the nib by winnowing as is used in the conventional chocolate process after step (a). The nib and shell containing materials are then treated separately in parallel processes and then recombined after step (f).

The process of the present invention may be either a batch or continuous process. In a batch process the ratio of the shell solids to nib solids is calculated for the starting product and following the cleaning, microbicidal step, optional enzymatic treatment, optional roasting and particle size reduction steps of the present invention, the shell and nib solids are recombined such that an equivalent ratio for the final product is calculated. In a continuous process, the shell solid of a particular bean is not necessarily recombined with the nib solid of that same bean. However, an average calculation over time is used.

Where the shell and nib are separated during processing, the shell containing material may be ground separately using the aforementioned method of pressing and cutting in order to reduce the particle size to such that less than 2% by weight of the product has a particle size greater than 150µm.

In one example of a process involving separate treatment of shell and nib, the nib can be converted to liquor using standard technology, for example, by use of a vertical ball mill. The ground shell can then be blended with the liquor in the appropriate proportion to form whole roasted cocoa bean liquor.

When producing the whole cocoa bean powder as the end product in a process with nib and shell have been separated the separated nib containing material is subjected to a pressing step to reduce the fat content to about 15% and form a presscake which is processed in steps (c) to (f) separately from the shell containing material and fat which is a liquid which is recovered. Preferably modern hydraulic pressing at about 800MPa is employed. In the particle size reduction step (f), the presscake is subjected to by kibbling and grinding, for example, in a pin mill. The processed nib and shell materials are then recombined in the same proportions as were present in the original cocoa beans by blending.

Where a defatted powder is produced as the whole product in a process in which separation processing of nib and shell, the above detailed step of solvent extraction is included after the pressing step (b) with the shell containing material being recombined after the particle size reduction step (f).

In the process of the invention, there is no addition of further shell and none of the shell is removed during the process considered as a whole.

The whole cocoa bean products made by the above-described process whole cocoa bean powder and defatted whole cocoa bean powder, may be processed by further steps in which they are used as whole or partial replacements for the equivalent products in which cocoa shell is limited to 1.75% by weight. They have nutritional advantages and are less expensive. In these processes the said whole cocoa bean end products are the final products in which these components are included.

### Figures

Figure 1 is a graphical illustration of the results obtained in the sensorial analysis of the samples of Example 4.
- Figure 2 is a graphical representation of the polyphenol content of the samples tested in Example 4.

The invention is now further described by reference to the following examples which in no way limit the scope of the invention.

### Example 1 Reduced Fat Whole Cocoa Bean Powder

The cocoa beans had the following initial composition based on the mean composition of a whole cocoa bean: water 7%, fat 45%, proteins 14%, ashes 5%, carbohydrates 29%, with an initial ratio of "dry defatted shell/dry defatted nib" of approximately 0.3. 1000 kg of whole cocoa beans were cleaned. 2% of product was lost in the operation, yielding 980 kg of clean beans. The clean bean were passed through an expeller for partial fat removal. The final moisture content after oil extraction was 2.80% and the fat content was 11.20%. 535.6kg of whole cocoa cake and 381 kg of cocoa butter were obtained. The cake was ground in a hammer mill to reduce the particle size to 1cm. Then a microbicidal step was carried out at 120°C for 1 hour at 145kPa and roasted and dried at 120°C for 20 minutes. The final moisture content after roasting was 1,5%. The dried bean intermediate was milled in a mill-separator for obtaining a final particle size-wherein 2% by weight of the product has a particle size greater than 150 µm. In the subsequent processes of milling, stabilizing and sieving, 5% of the initial cake was lost yielding 508.8 kg of final product with a moisture content of 2.80% and a fat content of 11.20%. The final product was a reduced fat whole cocoa bean powder.

### Example 2 Defatted Whole Cocoa Bean Powder

The cocoa beans had the following initial composition based on the mean composition of a whole cocoa bean: water 7%, fat 45%, proteins 14%, ashes 5%, carbohydrates 29%, with a ratio of "dry defatted shell/dry defatted nib" of approximately 0.3. 1000 kg of whole cocoa beans were cleaned. 2% of product was lost in the operation, yielding 980 kg of clean beans. The dry paste was passed through an expeller for partial fat reduction. After the expeller pressing step 376 kg of cocoa butter, and 537.6 kg of whole cocoa bean presscake with a moisture content of 2.23% and fat content of 12.09% were obtained. The cake was ground in a hammer mill to reduce the particle size to 1 to 3 mm for improving the solvent extraction and its subsequent milling. In the extraction 5000 l of Hexane were used for extracting the residual fat content in the cake. After the solvent extraction 479.6 kg of dry and defatted cocoa cake was obtained.

The solvent extracted presscake was subjected to a microbicidal step at 120°C at a pressure of 145kPa for 1 hour. The bean intermediate with reduced microbiological content was then dried at 90°C for 120 minutes under vacuum (70kPa). The dried bean intermediate was milled in a mill-separator for obtaining a final particle size wherein 2wt% of the product had a particle size of greater than 150µm. In the subsequent processes of milling, stabilizing and sieving, 5% of the initial cake was lost yielding 455.6kg of final product with a moisture content of 2.56% and a fat content of 1.46%. The final product was a defatted whole cocoa bean powder.

### Example 3 Reduced Fat Whole Cocoa Bean Powder

The cocoa beans had the following initial composition based on the mean composition of a whole cocoa bean: water 7%, fat 45%, proteisn 14%, ashes 5%, carbohydrates 29% with a ratio of "dry defatted shell/dry defatted nib" of 0.30 approximately. 1000kg of whole cocoa beans were cleaned. 2% of product was lost in the operation yielding 980kg of clean beans. The clean beans were cracked in a desheller by grinding and winnowing. 109.9kg of shell and 806.6kg of nib were obtained. The nib fraction was milled in a ball mill and pressed in a hydraulic press to obtain 306.6kg of butter and 500kg of reduced fat cocoa powder (14%).

Each part i.e. the shell and the nib was then subjected to the microbicidal step detailed in Example 2.

Both fractions were milled separately. The two fractions of ground shell and reduced fat cocoa powder were then recombined. The resulting mixture was ground in a mill-separator to obtain a final product wherein no more than 2wt% had a particle size of greater than 150µm. In the processes of grinding, stabilizing and sieving, 5% of the initial cake was lost to five a final yield of 579kg of final product with a moisture content of 2.80% and fat content of 11.80%. The final product was a reduced fat whole cocoa bean powder.

### Example 4 Enzymatic debittering process

The objective was to decrease the bitter taste of a presscake using an enzyme. The enzyme used in the process is a Phenol Oxidase (PPO), Laccase^{MT} supplied by Novozyme, SA.

### Materials and Methods

### Material

- Raw material: Presscake which has been made according to the process detailed in Example 1 up to and including step (c).
- Enzyme: Laccase
- Bioreactor
- Autoclave
- Oven

### Process

The process consisted of mixing 200g of ground press cake with 700 ml of water. The mixture was well agitated, the temperature set to 60°C and the enzyme added (100µl). The reaction was run for 30 min. After this time the enzyme was inactivated at 100°C for 15 min. The mixture was then sterilised at 121°C for 35 min and dried in a reactor at 90°C for 2 hours under vacuum at 50kPa. The sample was then subjected to a particle size reduction step according to Example 1. It was then analysed for polyphenol content and sensory properties.

### Sensorial analysis

A profile test was used for measuring bitterness. The results were analyzed using ANOVA and the Statgraphics program.

### Sample Preparation:

The samples were prepared in plastic cups of the same quantity. They were randomly numbered and contained the ingredients as shown in Table 1.

**Table 1**

| Ingredients | Cocoa powder subjected to an enzyme treatment step during processing | Control i.e no enzyme treatment |
|---|---|---|
| Cocoa Bean Powder | 0g | 12g |
| Treated Cocoa Bean Powder | 12g | 0g |
| Water | 273g | 273g |
| Sugar | 15g | 15g |

### Trial Procedure:

The trials were carried out with trained panelists.

The samples were served at room temperature on trays with the following:
a. Coded cups
b. Pencil
c. Response sheet for the current day.
d. Water for neutralization.

### Polyphenol content

This was determined using the colorimetric method (Folin -Ciocalteau).

### Statistical analysis

-An ANOVA test was used.

### Results and Discussion

### Sensorial Analysis

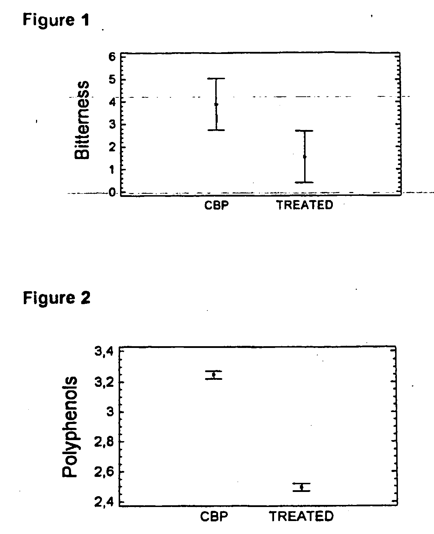

The results of the sensorial analysis are shown in Table 2 and 3 and in Figure 1. Table 2 shows the results of the ANOVA test for bitterness. Table 3 show the results of the multiple range test for bitterness. The results revealed that the enzyme treated sample had a significantly lower bitter taste when compared to the non treated sample with (p=0.04). The treatment of the material with the enzyme resulted in the elimination of the bitter taste. This was probably due to the oxidation of the polyphenols contained in the sample which are responsible for the bitter taste.

**Table 2**

| **Source** | **Sum of squares** | **Degree of freedom** | **Mean square** | **F** | **P value*** |
|---|---|---|---|---|---|
| **Inter-groups** | 24.1339 | 1 | 24.7339 | 4.74 | 0.0449 |
| **Intra-Groups** | 83.5511 | 1.6 | 5.22194 | | |
| **Total** | 108.285 | 17 | | | |

| | | | | | |
|---|---|---|---|---|---|
| *=P<0.05 means difference with 95% confidence | | | | | |

**Table 3**

| **Samples** | **Frequency** | **Mean Value** | **Homogeneous groups** | |
|---|---|---|---|---|
| Control CBP | 9 | 3.88889 | X | |
| Treated CBP | 9 | 1.54444 | X | |
| Contrast | | | Differences | +/- limits |
| Control-Treated | | | *2.34444 | 2.28364 |

| | | | | |
|---|---|---|---|---|
| *=P<0.05 means difference identified at 95% confidence CBP = cocoa bean powder (control) | | | | |

Treated CBP = cocoa bean powder where the process of production has included an enzyme treatment step.

### Polyphenol content

The treated sample showed a lower polyphenol content when compared to the non-treated one. The polyphenol content was much higher in the non-treated sample than in the treated sample with a statically high difference (p=0.00). This is illustrated in Tables 4 and 5 and in Figure 2. Table 4 shows the results of ANOVA polyphenol content analysis and Table 5 shows the results of the multiple range test for polyphenol content.

**Table 4**

| Source | Sum of Sum of squares | Degree of freedom | Mean square | F | P value* |
|---|---|---|---|---|---|
| Inter-groups | 0.849761 | 1 | 0.849761 | 1685.19 | 0 |
| Intra-Groups | 0.002 | 4 | 0.005 | | |
| Total | 0.851778 | 5 | | | |

**Table 5**

| Samples | Frequency | Mean Value | Homogeneous groups | |
|---|---|---|---|---|
| Control CBP | 3 | 3.24703 | X | |
| Treated CBP | 3 | 2.49437 | X | |
| Contrast | | | Differences | +/- limits |
| Control-Treated | | | 0.752667 | 0.050906 |

### Conclusion

The use of the polyphenol oxidase in this process resulted in debittering the sample. The oxidising effect of the enzyme reduced the polyphenol content and therefore the bitter taste.

## Claims

1. A process in which whole cocoa bean product is produced comprising the steps of:
(a) subjecting whole cocoa beans to a cleaning step in which the whole cocoa beans are passed through a cleaning machine that removes dried cocoa pulp, pieces of pod and other extraneous material to yield cleaned whole cocoa beans;
(b) pressing the whole cocoa beans to reduce the fat content to not more than 15wt% and to form a presscake and fat which is removed;
(c) subjecting the presscake to a particle size reduction step to obtain a bean intermediate whereby no more than 1 wt% of the product has a particle size greater than or equal to 1 cm;
(d) subjecting the bean intermediate to a microbicidal step to obtain a bean intermediate with a reduced microbiological content;
(e) subjecting the bean intermediate with reduced microbiological content to a drying step to reduce the moisture content to no more than 7wt% to give a dried bean intermediate;
(f) subjecting the dried bean intermediate to a particle size reduction step whereby no more than 2wt% of the product has a particle size of greater than or equal to 150µm **characterized in that**;
(i) substantially no solids other than are removed; and
(ii) a whole cocoa bean product is produced as the end product;

2. The process according to claim 1 including additional steps after step (a) and prior to step (b) comprising:
(i) winnowing the whole cleaned cocoa beans of step (a) to remove the shell from the nib; and
(ii) treating the nib and shell separately in parallel processes and then recombining the nib and the shell after step (f).

3. The process according to any preceding claim wherein the additional step is carried out by hydraulic pressing at a pressure of about 5MPa.

4. The process according to any preceding claim wherein step (b) is carried out in an expeller press.

5. The process according to any preceding claim wherein after step (b) and prior to step (c) the further step of
(ii) solvent extraction to reduce the fat content of the press cake of step (i) to less than 2 wt% is included.

6. The process according to claim 5 wherein the solvent used in step (ii) is an organic solvent, preferably hexane.

7. The process according to claim 5 wherein the solvent used in step (ii) is supercritical carbon dioxide, butane or propane.

8. The process according to any preceding claim wherein in step (c) either a hammer mill followed by two ball mills or a grinding mills followed by ball mills are employed.

9. The process according to any preceding claim wherein after step (c) and prior to step (d), an enzymatic treatment step is included which comprises the stages of
(i) adding water to give a moisture content in the range from 50 to 70wt% and adjusting the pH to a value in the range 5-7 and the temperature to a value in the range 15-60°C;
(ii) adding enzymes and allowing the reaction to proceed for a time period in the range from 30 to 60 mins; and
(iii) raising the temperature to a value in the range 100-120°C to inactivate the enzymes.

10. The process according to claim 9, wherein the enzyme used in stage (iii) is polyphenol oxidase.

11. The process according to any one of claims 1 to 8, which further comprises an alkalization step after step (c) and prior to step (d) wherein the alkalization step comprises the stages of:
(i) adding water to give a moisture content in the range from 20 to 50wt%;
(ii) adding potassium or sodium carbonate in an amount in the range from 2 to 4wt%; and
(iii) heating the material for,a time period in the range from 15 to 45 minutes at a temperature in the range from 70 to 100°C.

12. The process according to any preceding claim, wherein in the microbiological content reduction step (d) the contamination of the whole cocoa beans is reduced to less than 5x10³ c.f.u.g⁻¹.

13. The process according to claim 12 wherein in the microbiological content reduction step (d) the bean intermediate is treated with pressurized steam.

14. The process according to claim 13 wherein in the microbiological content reduction step (d) the beans intermediate is exposed to steam at a pressure of 145KPa and at a temperature in the range 110 to 130°C for a time of 30 mins to 1 hour.

15. The process according to any preceding claim, wherein a roasting step is included after step (b) and prior to step (c).

16. The process according to claim 15, wherein the roasting step is carried out at atmospheric pressure at a temperature in the range from 110 to 150°C and for a time period in the range from 20 to 40 minutes.

17. The process according to any preceding claim wherein in the drying step the moisture content is reduced to a value in the range 1-5%.

18. The process according to any preceding claim, wherein the drying step is carried out at a temperature in the range from 80 to 90°C for a time period in the range from 30 to 120 minutes at a pressure in the range from 50 to 90 kPa.

19. The process according to any preceding claim wherein the component comprising nib is converted to a liquor by pressing and the whole cocoa bean end product is whole cocoa bean liquor.

20. The process according to any preceding claim, wherein after step (f), the whole cocoa bean product is subjected to a stabilization and/or sieving step.

21. The process according to claim 20, wherein the stabilization by cooling is carried out prior to sieving.

22. The process according to any claim 20 or 21, wherein in the stabilization step, the whole cocoa bean product is cooled to a temperature in the range from 20 to 25°C for a time period in the range from 1 to 4 hours.

23. The process according to any preceding claim wherein in the particle size reduction step (f), the component of the bean intermediate comprising the shell is subjected to a cutting action.

24. The process according to any preceding claim, wherein the particle size reduction step (f) employs the use of a classification.

25. The process according to claim 21 or 22, wherein in the sieving step (h), sieves of a size in the range from 200 to 300µm are used.

## Patentansprüche

1. Verfahren, bei dem ein Produkt aus ganzen Kakaobohnen hergestellt wird, welches folgende Schritte umfasst:
(a) Unterziehen der ganzen Kakaobohnen einem Reinigungsschritt, in welchem die ganzen Kakaobohnen durch eine Reinigungsmaschine geführt werden, welche getrocknetes Kakaofruchtfleisch, Hülsenstücke und weiteres irrelevantes Material entfernt, um gereinigte ganze Kakaobohnen zu erhalten;
(b) Verpressen der ganzen Kakaobohnen, um den Fettgehalt auf nicht über 15 Gew.% zu reduzieren, und um einen Presskuchen und entferntes Fett zu bilden;
(c) Unterziehen des Presskuchens einem Partikelgrößenreduzierungsschritt, um ein Zwischenprodukt aus Bohnen zu erhalten, wobei nicht mehr als 1 Gew.% des Produktes eine Partikelgröße größer oder gleich 1 cm hat;
(d) Unterziehen des Zwischenprodukts aus Bohnen einem mikrobizidem Schritt, um ein Zwischenprodukt aus Bohnen mit einem reduziertem mikrobiologischen Gehalt zu erhalten;
(e) Unterziehen des Zwischenprodukts aus Bohnen mit reduziertem mikrobiologischem Gehalt einem Trocknungsschritt, um den Feuchtigkeitsgehalt auf nicht mehr als 7 Gew.% zu reduzieren, um ein getrocknetes Zwischenprodukt aus Bohnen bereitzustellen;
(f) Unterziehen des getrockneten Zwischenprodukts aus Bohnen einem Partikelgrößenreduzierungsschritt, wobei nicht mehr als 2 Gew.% des Produkts eine Partikelgröße größer oder gleich 150µm hat, **dadurch gekennzeichnet, dass**;
(i) im Wesentlichen außer Fett keine anderen Feststoffe entfernt werden; und
(ii) eine Produkt ganzer Kakaobohnen als Endprodukt hergestellt wird.

2. Verfahren nach Anspruch 1, das zusätzliche Schritte nach Schritt (a) und vor Schritt (b) beinhaltet, umfassend:
(i) Worfeln der ganzen gereinigten Kakaobohnen aus Schritt (a), um die Schale vom Kakaokernbruch zu entfernen; und
(j) getrenntes Behandeln des Kakaokernbruchs und der Schale, in parallelen Verfahren, und dann erneutes Kombinieren des Kakaokernbruchs und der Schale nach Schritt (f).

3. Verfahren nach einem der vorherigen Ansprüche, in dem der zusätzliche Schritt durch hydraulisches Pressen mit einem Druck von ungefähr 5 MPa durchgeführt wird.

4. Verfahren nach einem der vorherigen Ansprüche, in dem der Schritt (b) in einer Expellerpresse durchgeführt wird.

5. Verfahren nach einem der vorherigen Ansprüche, in dem nach dem Schritt (b) und vor Schritt (c) der weitere Schritt
(ii) Lösungsmittelextraktion, um den Fettgehalt des Presskuchens aus Schritt (i) auf weniger als 2 Gew.% zu reduzieren, beinhaltet ist.

6. Verfahren nach Anspruch 5, in dem der in Schritt (ii) verwendete Lösungsmittel ein organischer Lösungsmittel ist, vorzugsweise Hexan.

7. Verfahren nach Anspruch 5, in dem der in Schritt (ii) verwendete Lösungsmittel überkritischer Kohlendioxid, Butan oder Propan ist.

8. Verfahren nach einem der vorherigen Ansprüche, in dem im Schritt (c) entweder eine Hammermühle, gefolgt von zwei Kugelmühlen oder eine Mahlanlage, gefolgt von Kugelmühlen, eingesetzt werden.

9. Verfahren nach einem der vorherigen Ansprüche, in dem nach Schritt (c) und vor Schritt (d), ein enzymatischer Behandlungsschritt beinhaltet ist, welcher folgende Stufen beinhaltet:
(i) Zufügen von Wasser, um einen Feuchtigkeitsgehalt im Bereich von 50 bis 70 Gew.% bereitzustellen, und Einstellen des pH-Werts auf einen Bereich von 5 bis 7, und der Temperatur auf einen Wert im Bereich von 15 bis 60°C;
(ii) Zufügen von Enzymen und die Reaktion in einem Zeitraum im Bereich von 30 bis 60 Min. erfolgen lassen; und
(iii) Erhöhen der Temperatur auf einen Wert im Bereich von 100 bis 120°C, um die Enzyme zu desaktivieren.

10. Verfahren nach Anspruch 9, in dem das in Stufe (iii) verwendete Enzym Polyphenoloxidase ist.

11. Verfahren nach einem der Ansprüche 1 bis 8, welches desweiteren einen Alkalisierungsschritt nach Schritt (c) und vor Schritt (d) umfasst, wobei der Alkalisierungsschritt folgende Stufen umfasst:
(i) Zufügen von Wasser, um einen Feuchtigkeitsgehalt im Bereich von 20 bis 50 Gew.% bereitzustellen;
(ii) Zufügen von Kalium- oder Natriumcarbonat eines Betrags im Bereich von 2 bis 4 Gew.%; und
(iii) Erhitzen des Materials in einem Zeitraum im Bereich von 15 bis 45 Minuten bei einer Temperatur im Bereich von 70 bis 100°C.

12. Verfahren nach einem der vorherigen Ansprüche, in dem im Reduzierungsschritt (d) des mikrobiologischen Gehalts die Verunreinigung der ganzen Kakaobohnen auf weniger als 5x10³ c.f.u.g⁻¹ reduziert wird.

13. Verfahren nach Anspruch 12, in dem im Reduzierungsschritt (d) des mikrobiologischen Gehalts das Zwischenprodukt aus Bohnen mit Druckdampf behandelt wird.

14. Verfahren nach Anspruch 13, in dem im Reduzierungsschritt (d) des mikrobiologischen Gehalts das Zwischenprodukt aus Bohnen einem Dampf bei einem Druck von 145KPa und bei einer Temperatur im Bereich von 110 bis 130°C für eine Zeit von 30 Min. bis 1 Stunde ausgesetzt wird.

15. Verfahren nach einem der vorherigen Ansprüche, in dem ein Röstungsschritt nach Schritt (b) und vor Schritt (c) beinhaltet ist.

16. Verfahren nach Anspruch 15, in dem der Röstungsschritt bei einem atmosphärischen Druck bei einer Temperatur im Bereich von 110 bis 150°C und in einem Zeitraum im Bereich von 20 bis 40 Minuten durchgeführt wird.

17. Verfahren nach einem der vorherigen Ansprüche, in dem in dem Trocknungsschritt der Feuchtigkeitsgehalt auf einen Wert im Bereich von 1 bis 5 % reduziert wird.

18. Verfahren nach einem der vorherigen Ansprüche, in dem der Trocknungsschritt bei einer Temperatur im Bereich von 80 bis 90°C in einem Zeitraum im Bereich von 30 bis 120 Minuten bei einem Druck im Bereich von 50 bis 90 KPa durchgeführt wird.

19. Verfahren nach einem der vorherigen Ansprüche, in dem der Komponente umfassende Kakaokernbruch durch Pressen in eine Flüssigkeit umgewandelt wird und das Endprodukt ganzer Kakaobohnen eine Flüssigkeit ganzer Kakaobohnen ist.

20. Verfahren nach einem der vorherigen Ansprüche, in dem nach dem Schritt (f) das Produkt ganzer Kakaobohnen einem Stabilisierungs- und/oder Siebschritt unterzogen wird.

21. Verfahren nach Anspruch 20, in dem die Stabilisierung durch Kühlen vor dem Sieben durchgeführt wird.

22. Verfahren nach einem der Ansprüche 20 oder 21, in dem in dem Stabilisierungsschritt das Produkt ganzer Kakaobohnen auf eine Temperatur im Bereich von 20 bis 25°C in einem Zeitraum im Bereich von 1 bis 4 Stunden abgekühlt wird.

23. Verfahren nach einem der vorherigen Ansprüche, in dem in dem Partikelgrößenreduzierungsschritt (f) der Bestandteil des Zwischenprodukt aus Bohnen, der die Schale umfasst, einem Schneidevorgang unterzogen wird.

24. Verfahren nach einem der vorherigen Ansprüche, in dem der Partikelgrößenreduzierungsschritt (f) den Gebrauch einer Klassifizierung verwendet.

25. Verfahren nach Anspruch 21 oder 22, in dem in dem Siebschritt (h) Siebe einer Größe im Bereich von 200 bis 300µm verwendet werden.

## Revendications

1. Procédé dans lequel un produit des fèves de cacao entières est produit en comprenant les étapes de :
(a) soumettre les fèves de cacao entières à une étape de nettoyage dans laquelle les fèves de cacao entières passent à travers une machine de nettoyage qui élimine de la pulpe de cacao sèche, des pièces de cabosse et d'autres matières étrangères pour produire des fèves de cacao entières nettoyées ;
(b) presser les fèves de cacao entières pour réduire le contenu gras au maximum au 15% en poids et pour former un tourteau et de la graisse qui est éliminée ;
(c) soumettre le tourteau à une étape de réduction de dimension particulaire pour obtenir un produit intermédiaire de fèves, de ce fait au maximum 1% en poids du produit a une dimension particulaire supérieure ou égale à 1 cm ;
(d) soumettre le produit intermédiaire de fèves à une étape microbicide pour obtenir un produit intermédiaire de fèves avec un contenu microbiologique réduit ;
(e) soumettre le produit intermédiaire de fèves avec un contenu microbiologique réduit à une étape de séchage pour réduire le contenue d'humidité au maximum au 7% en poids pour fournir un produit intermédiaire de fèves sec ;
(f) soumettre le produit intermédiaire de fèves sec à une étape de réduction de dimension particulaire dans laquelle au maximum 2% en poids du produit a une dimension particulaire supérieure ou égale a 150 µm **caractérisé en ce que** :
(i) essentiellement aucun solide autre que la graisse n'est éliminé : et
(ii) un produit de fèves de cacao entières est produit comme le produit fini ;

2. Procédé selon la revendication 1 incluant des étapes additionnelles après l'étape (a) et avant l'étape (b) comprenant :
(i) vanner les fèves de cacao entières nettoyées de l'étape (a) pour éliminer la coque de l'amande ; et
(ii) traiter l'amande et la coque séparément dans des procédés parallèles et ensuite combiner à nouveau l'amande et la coque après l'étape (f).

3. Procédé selon l'une quelconque des revendications précédentes dans lequel l'étape additionnelle est réalisée par pressage hydraulique à une pression d'environ 5 Mpa.

4. Procédé selon l'une quelconque des revendications précédentes dans lequel l'étape (b) est réalisée dans une presse de torsion.

5. Procédé selon l'une quelconque des revendications précédentes dans lequel après l'étape (b) et avant l'étape (c) on inclut l'étape additionnelle de :
(ii) l'extraction par solvant pour réduire le contenu gras du tourteau de l'étape (i) à moins de 2% en poids.

6. Procédé selon la revendication 5 dans lequel le solvant utilisé dans l'étape (ii) est un solvant organique, de préférence de l'hexane.

7. Procédé selon la revendication 5 dans lequel le solvant utilisé dans l'étape (ii) est du dioxyde de carbone, du butane ou du propane supercritiques.

8. Procédé selon l'une quelconque des revendications précédentes dans lequel dans l'étape (c) on emploie soit un broyeur à marteau suivi de deux broyeurs à boulets ou un concasseur suivi de broyeurs à boulets.

9. Procédé selon l'une quelconque des revendications précédentes dans lequel après l'étape (c) et avant l'étape (d), on inclut une étape de traitement enzymatique qui comprend les étapes de ;
(i) ajouter de l'eau pour fournir une contenu humide dans l'intervalle de 50 a 70% en poids et ajuster le pH à une valeur dans l'intervalle de 5-7 et la température à une valeur dans l'intervalle de 15-60°C ;
(ii) ajouter des enzymes et laisser que la réaction progresse pendant une période de temps dans l'intervalle de 30 à 60 minutes ; et
(iii) élever la température à une valeur dans l'intervalle de 100-120°C pour inactiver les enzymes.

10. Procédé selon la revendication 9, dans lequel l'enzyme utilisée dans l'étape (iii) est de la polyphénoloxydase

11. Procédé selon l'une quelconque des revendications 1 a 8, qui comprend, en outre, une étape d'alcalisation après l'étape (c) et avant l'étape (d) dans lequel l'étape d'alcalisation comprend les étapes de :
(i) ajouter de l'eau pour fournir un contenu humide dans l'intervalle de 20 à 50% en poids,
(ii) ajouter du carbonate de potassium ou de calcium dans une quantité dans l'intervalle de 2 à 4% en poids ; et
(iii) chauffer la matière pendant une période de temps dans l'intervalle de 15 a 45 minutes à une température dans l'intervalle de 70 à 100°C.

12. Procédé selon l'une quelconque des revendications précédentes, dans lequel dans l'étape (d) de réduction du contenu microbiologique, la contamination des fèves de cacao entières est réduite à moins de 5x10³ c.f.u.g⁻¹.

13. Procédé selon la revendication 12, dans lequel dans l'étape (d) de réduction du contenu microbiologique, le produit intermédiaire de fèves est traité avec de la vapeur pressurisée.

14. Procédé selon la revendication 13, dans lequel dans l'étape (d) de réduction du contenu microbiologique, le produit intermédiaire de fèves est exposé à de la vapeur à une pression de 145 kPa et a une température dans l'intervalle de 110°C a 130°C pendant une période de temps de 30 minutes a 1 heure.

15. Procédé selon l'une quelconque des revendications précédentes, dans lequel une étape de torréfaction est incluse après l'étape (b) et avant l'étape (c).

16. Procédé selon la revendication 15, dans lequel l'étape de torréfaction est réalisée à pression atmosphérique à une température dans l'intervalle de 110 à 150°C et pendant une période de temps dans l'intervalle de 20 à 40 minutes.

17. Procédé selon l'une quelconque des revendications précédentes, dans lequel dans l'étape de séchage le contenu humide est réduit à une valeur dans l'intervalle de 1-5%.

18. Procédé selon l'une quelconque des revendications précédentes, dans lequel l'étape de séchage est réalisée à une température dans l'intervalle de 80 à 90°C pendant une période de temps dans l'intervalle de 30 à 120 minutes à une pression dans l'intervalle de 50 à 90 kPa.

19. Procédé selon l'une quelconque des revendications précédentes, dans lequel l'amande comprenant des composants est convertie en un liquide en la pressant et le produit fini de fèves de cacao entières est du liquide de fèves de cacao entières.

20. Procédé selon l'une quelconque des revendications précédentes, dans lequel après l'étape (f), le produit de fèves de cacao entières est soumis à une étape de stabilisation et/ou de tamisage.

21. Procédé selon la revendication 20, dans lequel la stabilisation par refroidissement est réalisée avant le tamissage.

22. Procédé selon l'une quelconque des revendications 20 ou 21, dans lequel dans l'étape de stabilisation, le produit de fèves de cacao entières est refroidi à une température dans l'intervalle de 20 à 25°C pendant une période de temps dans l'intervalle de 1 à 4 heures.

23. Procédé selon l'une quelconques de revendications précédentes, dans lequel dans l'étape (f) de réduction de la dimension articulaire, le composant du produit intermédiaire de fèves comprenant la coque est soumis à une action de coupure.

24. Procédé selon l'une quelconque des revendications précédentes, dans lequel l'étape (f) de réduction de la dimension particulaire emploie l'utilisation d'un classement.

25. Procédé selon la revendication 21 ou 22, dans lequel dans l'étape (h) de tamisage, on utilise de tamis d' une dimension dans l'intervalle de 200 à 300 µm.
